# FASCICULE DE BREVET EUROPEEN

(11) **EP 2 700 226 B1**
(45) Date de publication et mention de la délivrance du brevet: **02.06.2021**
(21) Numéro de dépôt: 12722434.3
(22) Date de dépôt: 18.04.2012
(51) Int. Cl.: H04N 7/24, G06T 9/00, H04N 21/234, H04N 21/44, H04N 21/8543, H04N 19/25, H04N 21/2343

(54) **PROCEDES ET APPAREILS DE PRODUCTION ET DE TRAITEMENT DE REPRESENTATIONS DE SCENES MULTIMEDIAS**
VERFAHREN UND VORRICHTUNGEN ZUR ERZEUGUNG UND VERARBEITUNG VON DARSTELLUNGEN VON MULTIMEDIA-SZENEN
METHODS AND DEVICES FOR PRODUCING AND PROCESSING REPRESENTATIONS OF MULTIMEDIA SCENES

(30) Priorité: 19.04.2011 FR 1153387
(43) Date de publication de la demande: 26.02.2014
(73) Titulaire: Prologue, 91940 Les Ulis (FR); Association Pour La Recherche Et Le Développement De Méthodes Et Processus Industriels "Armines", 75006 Paris (FR); Institut Mines-Telecom, 75013 Paris (FR)
(72) Inventeur: MITREA, Mihai, Petru, F-91600 Savigny sur Orge (FR); JOVESKI, Bojan, F-75012 Paris (FR); GARDENGHI, Ludovico, F-94240 l'Hay les Roses (FR); MARSHALL, Iain, James, F-77140 St Pierre les Nemours (FR); PRETEUX, Françoise, F-75013 Paris (FR)
(74) Mandataire: Cabinet Beau de Loménie
(86) Numéro de dépôt international: PCT/FR2012/050849
(87) Numéro de publication internationale: WO 2012/172212

(56) Documents cités:
- FR-A1- 2 902 908
- FR-A1- 2 917 880
- DUFOURD J ED - FERNANDO PEREIRA ET AL: "BIFS: Scene Description", 10 juillet 2002 (2002-07-10), MPEG-4 BOOK, THE, PRENTICE HALL, US, PAGE(S) 103 - 147, XP007919227, ISBN: 0-13-061621-4 Section 4.2.3
- MICHAEL REPPLINGER ET AL: "Extending X3D for distributed multimedia processing and control", 3D WEB TECHNOLOGY, ACM, 2 PENN PLAZA, SUITE 701 NEW YORK NY 10121-0701 USA, 16 June 2009 (2009-06-16), pages 61-69, XP058132493, DOI: 10.1145/1559764.1559774 ISBN: 978-1-60558-432-4
- Benot Pellan: "Scalabilité de scène multimédia", , 7 October 2010 (2010-10-07), XP055184330, Retrieved from the Internet: URL:https://tel.archives-ouvertes.fr/paste l-00579489 [retrieved on 2015-04-20]

## Description

L'invention se situe dans le domaine du traitement de contenus multimédias, et plus particulièrement dans le traitement de scènes multimédias.

Dans le contexte de l'invention, on appellera scène multimédia un ensemble d'éléments le plus souvent hétérogènes, choisis par exemple parmi du texte, des graphiques vectoriels ou non, des séquences audio (naturelles ou de synthèse), des images, des séquences vidéo, des objets 3D statiques ou animés. Une scène multimédia peut contenir également tout autre type d'information ayant vocation à influencer (modifier, interagir sur...) ses éléments ou des éléments du monde extérieur (température, retours sensoriels - haptique, olfactif...) ou encore des éléments liés à l'utilisateur, ses dispositifs et environnements.

L'invention vise plus particulièrement un procédé et un appareil de production de représentation de scènes multimédias, ainsi qu'un procédé et un appareil de traitement de ces représentations.

Dans divers contextes, on souhaite transmettre une scène multimédia à un équipement distant : fourniture d'accès à une page web, accès à un univers virtuel collaboratif (réseau social, ...), jeu en ligne, utilisation à distance d'une application informatique, etc.

De façon classique, la fourniture des données multimédias à l'équipement distant consiste à transformer la scène multimédia en une séquence d'images et de sons associés et à coder ces images et ces sons en vue de leur transmission en employant des procédés développés pour la transmission de telles données.

Divers protocoles, formats et langages ont été proposés afin de permettre la production d'une représentation d'une scène multimédia, cette représentation décrivant le positionnement spatial et temporel des différents éléments de la scène ainsi que le comportement de ces éléments dans différentes circonstances (par exemple, la gestion de changements suite à l'action d'un utilisateur, la gestion des animations, etc.).

De façon connue, la scène multimédia peut être reconstruite par le récepteur à partir de sa représentation initiale et mise à jour (synchrone ou non) sur réception de données complémentaires ou par exécution de procédures incluses dans la représentation elle-même.

Il convient de noter que même si les représentations de scène sont souvent utilisées à des fins de transmission de scènes multimédias vers un équipement distant, notamment via un réseau, elles peuvent être utilisées à d'autres fins.

Une représentation de scène consiste en un graphe possédant des nœuds (ou sommets) et des relations entre ces nœuds, chacun de ces nœuds définissant un aspect de la scène multimédia (objet de la scène, texture, comportement d'un objet lors d'un événement particulier, etc.). Ce graphe est appelé graphe de scène.

Certains formats et langages proposent de représenter une scène multimédia sous forme d'un graphe hiérarchisé sans cycle (arbre) couramment appelé indifféremment « arborescence de scène » ou « graphe de scène ».

Quelques unes des technologies de représentation de scène déjà connues sont MPEG-4 BiFS (d'après l'anglais « Binary Format for Scenes », c'est-à-dire « Format Binaire pour Scènes ») défini dans la norme 14496-11 de la Commission Electrotechnique Internationale (CEI ou IEC en anglais) et de la Organisation internationale de normalisation (OIN ou ISO en anglais), MPEG-4 LASeR (d'après l'anglais « Lightweight Application Scene Représentation », c'est-à-dire «Représentation Légère de Scènes») défini dans la norme 14496-20 de la CEI, VRML (d'après l'anglais « Virtual Reality Modelling Language » ou bien « Virtual Reality Markup Language », c'est-à-dire « Langage de Modélisation d'Univers Virtuel») défini par le World Wide Web Consortium, X3D (un format qui succède à VRML), ou bien SVG (d'après l'anglais « Scalable Vector Graphics »), un format défini par le World Wide Web Consortium.

Il est usuel d'appliquer un ou plusieurs traitements (par exemple la compression, le cryptage, l'enrichissement ...) à une représentation de scène avant son utilisation (stockage, transmission, affichage, etc.).

Souvent, les données de la représentation de scène sont alors converties, notamment sous une forme binaire permettant un codage sous un nombre réduit d'octets. Selon certains systèmes, les données de la représentation de scène sont agrégées à des flux de données vidéo et/ou bien audio, comme par exemple selon le protocole SAF (d'après l'anglais « Simple Aggregation Format », c'est-à-dire « Format d'Agrégation Simple ») qui associe des flux audiovisuels à une représentation de scène LASeR. Le transport des données peut être assuré de diverses façons, selon l'application visée. Cela implique, par exemple, une mise en paquets appropriée des données afin de permettre par exemple (1) leur transport, sous forme de flux de transport MPEG-2 ou autre et/ou bien (2) l'utilisation de protocoles de communication tels que RTP/RTSP, etc. L'invention n'est pas limitée par les traitements appliqués à la représentation de scène.

En outre, divers mécanismes peuvent être utilisés pour livrer les données de la représentation de scène au client, par exemple : le téléchargement progressif, le système dit « téléchargement-et-jouer », la transmission en continu («streaming»), la diffusion («broadcast»).

L'invention n'est également pas limitée par rapport au mécanisme de livraison.

L'invention peut être aussi employée pour des applications selon lesquelles la représentation de scène est produite et rendue par le même dispositif, ou pour des applications dans lesquelles les données de représentation ne sont pas transmises sur un réseau.

Certaines des technologies de représentation de scène exploitent la nature du contenu hétérogène compris dans la scène multimédia, afin de permettre notamment un traitement adapté à la nature ou au type du contenu concerné. On peut citer à cet égard la norme BiFS qui définit des procédés de codage différents selon la nature du contenu faisant partie de la scène multimédia.

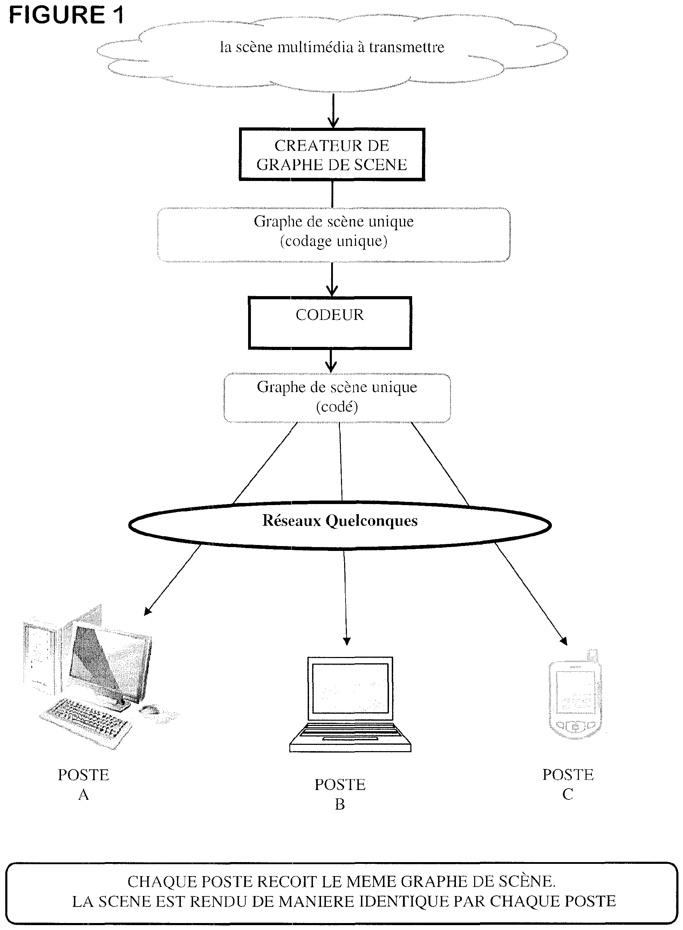

Dans l'état actuel de la technique, le schéma de codage est prédéfini et statique. La Figure 1 est un graphique qui représente un système de création et de diffusion de graphes de scène employant ce schéma de codage statique.

Un tel schéma de codage statique et prédéfini de traitement est parfaitement efficace lorsque la scène multimédia est destinée à être traitée par des équipements dont les performances en termes de matériel sont connues et identiques, pour le moins de même ordre. Il est donc nécessaire de prendre en compte les capacités de l'appareil destinataire des données (la taille de la mémoire, la vitesse du processeur, etc.) ainsi que les propriétés du canal de transmission de ces données (débit de réseau, etc.).

Par exemple, si l'appareil destinataire des données est un client léger disposant de matériel de capacités modestes, par exemple un téléphone portable, et/ou si le canal de transmission de ces données n'a qu'une largeur de bande limitée, il convient de comprimer fortement les données de représentation de scène et de prévoir un procédé de codage qui permet un décodage relativement peu complexe au niveau du client.

En revanche, si l'appareil destinataire des données est un ordinateur de bureau disposant d'un processeur performant et relié à la source de diffusion par un réseau haut débit, il convient d'adapter les données de représentation de scène de façon à permettre le rendu de la scène à haute définition au niveau de l'appareil destinataire.

Le besoin d'adapter les données de la représentation de scène aux capacités de l'appareil destinataire des données présente des problèmes, notamment dans le cas d'un serveur de données de représentations de scène à des clients hétérogènes via des réseaux hétérogènes, ce cas de figure se produisant notamment dans le contexte du travail collaboratif.

L'utilisation actuelle de la technologie BiFS répond à ce problème en prenant en compte toutes les configurations possibles (qui doivent, donc, être connues lors de la création de la scène). Une première approche consiste à produire des versions différentes de la représentation de scène, destinées respectivement aux terminaux et aux réseaux de capacités différentes. Par exemple, si la scène multimédia comporte une image à haute résolution, l'utilisation actuelle de la norme BiFS prévoit la création d'une première représentation de scène avec l'image à haute définition, cette première représentation étant destinée à un terminal performant, et une seconde représentation de scène avec l'image à résolution réduite, cette seconde représentation étant destinée à un équipement de capacités limitées.

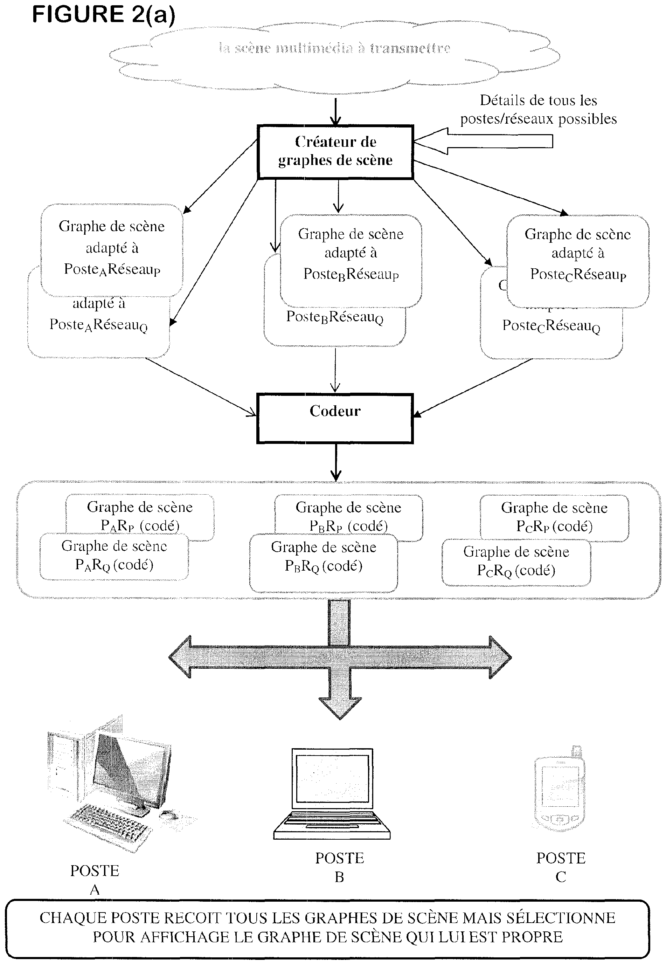

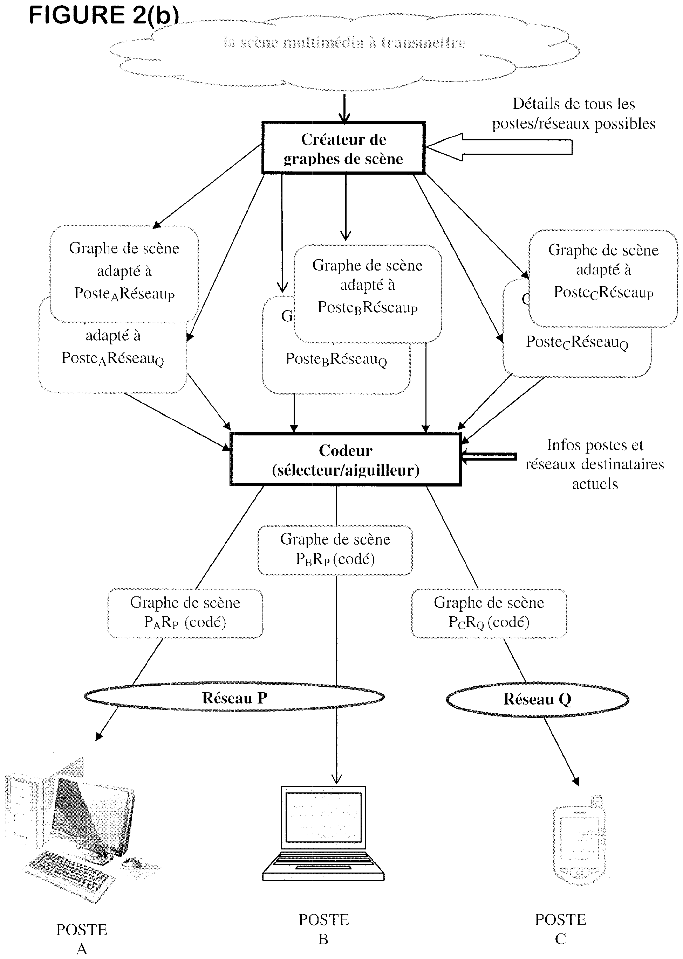

Selon cette première approche, soit l'ensemble des graphes de scène est diffusé et les différents postes opèrent une sélection du graphe de scène qu'il convient de traiter (voir à la Figure 2(a)) soit un sélecteur/aiguilleur est prévu au niveau du codeur, ou en aval de celui-ci, afin d'aiguiller vers chaque poste le graphe de scène qui lui est propre (voir à la Figure 2(b)). Bien entendu, cette première approche multiplie les versions du graphe de scène qui doivent être produites par le créateur de graphe de scène et, selon l'exemple de la Figure 2(a), augmente l'encombrement des réseaux de diffusion.

La thèse « Scalabilité de scène multimédia » par Benoit Pellan prévoit la création d'une représentation de scène multimédias selon laquelle une version de base d'un objet est créé et associée à des couches d'enrichissement pour permettre l'adaptation ultérieure de l'objet. La représentation de scène comporte aussi bien les couches d'enrichissement que la version de base de l'objet et, lors de l'adaptation, les couches inutiles ne sont pas exploitées.

On pourrait concevoir une deuxième approche selon laquelle , on utiliserait, par exemple, le nœud BiFS « switch » et le paramètre « whichChoice » de celui-ci utilisé d'une façon conjointe avec les nœuds « Conditional », et inclure dans une même représentation de scène l'image à haute résolution (dans un premier sous-graphe) ainsi que l'image à résolution réduite (dans un deuxième sous-graphe). Le client recevra la représentation de scène avec ses deux sous-graphes différents et choisira, en fonction d'un paramètre, d'afficher soit l'image à haute résolution soit l'image à résolution réduite. Le nœud « switch » et son utilisation sont exposés dans le chapitre 4 du livre « The MPEG-4 Book », par J-C Dufourd et al, Prentice Hall, ISBN :0-13-061621-4.

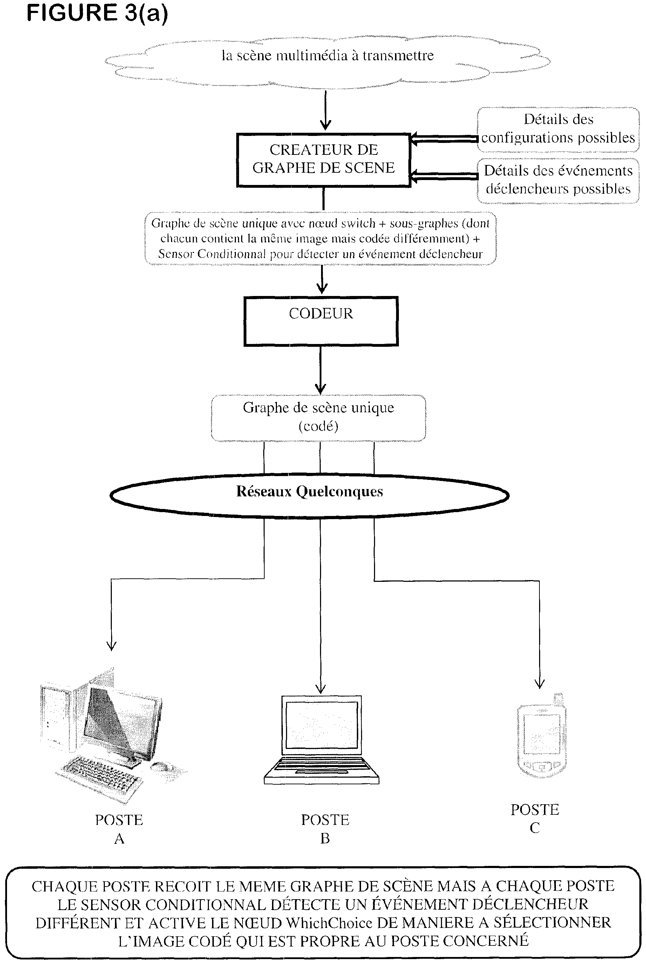

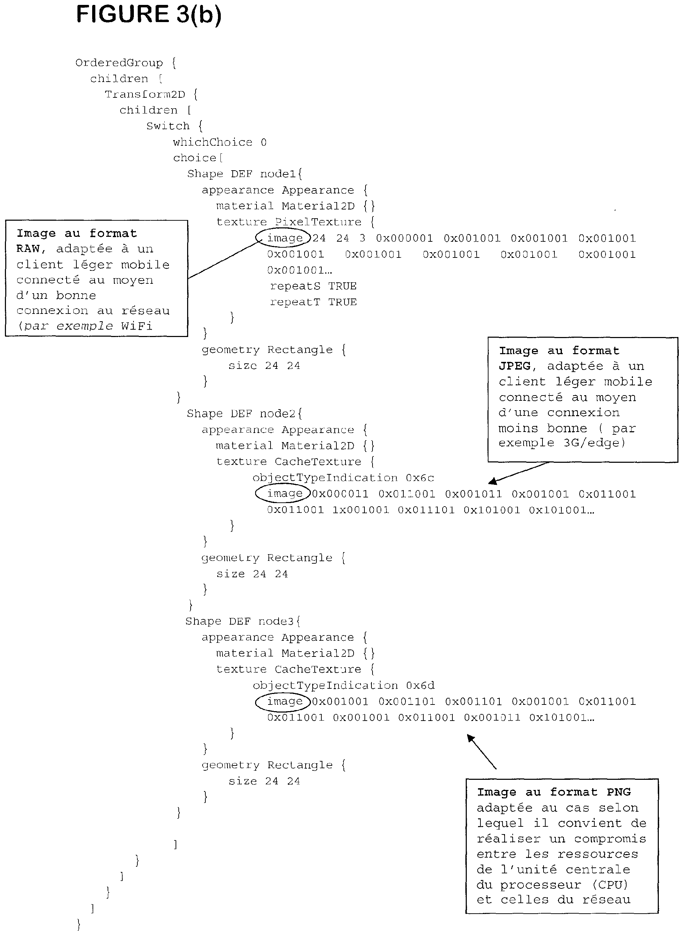

La Figure 3(a) représente un système de création et de diffusion de graphes de scène selon cette deuxième approche. La figure 3(b) montre un exemple d'un nœud switch selon la deuxième approche mentionnée ci-dessus, et illustre trois sous-graphes correspondant chacun à une version différente d'une même image. Le graphe de scène comportant ce nœud switch serait envoyé à chaque poste utilisateur, ce qui implique la transmission à chaque poste des trois versions de l'image. Une telle approche augmente inutilement l'encombrement du réseau et le temps de réception du graphe de scène.

De telles approches d'adéquation d'une scène aux divers terminaux/réseaux implique la création d'un graphe de scène (ou, au moins, d'un sous-graphe) pour chaque configuration considérée, ce qui est coûteux en termes de temps et d'utilisation du processeur et de la mémoire. Ainsi, pour transmettre une scène par exemple avec vidéo haute définition et contenus 3D finement texturés, sur 3 terminaux aux ressources différentes (par exemple une station de travail, un ordinateur portable, un téléphone mobile), il est nécessaire de créer trois représentations de scène (ou, au moins, sous-graphes) différentes pour assurer la même fonctionnalité sur les trois terminaux. Cette même scène transmise vers deux stations de travail via un réseau large bande et un réseau mobile à faible débit, doit à nouveau être représentée par deux graphes (ou sous-graphes) de scène différents : bien que le terminal reçoit la scène en son intégralité (c'est-à-dire, avec tous le graphes/sous-graphes possibles), seule la partie (graphe ou sous-graphe) concernant la configuration concrète est affichée.

On notera que cette solution, basée sur la réplication/multiplication de certains graphes ou sous-graphes pour chaque configuration terminal/réseau *a priori* possible, n'est pas parfaitement satisfaisante lorsque les propriétés du réseau de transmission sont instables et trop différentes de celles du réseau d'origine ou quant le nombre de ces diverses configurations est trop élevé.

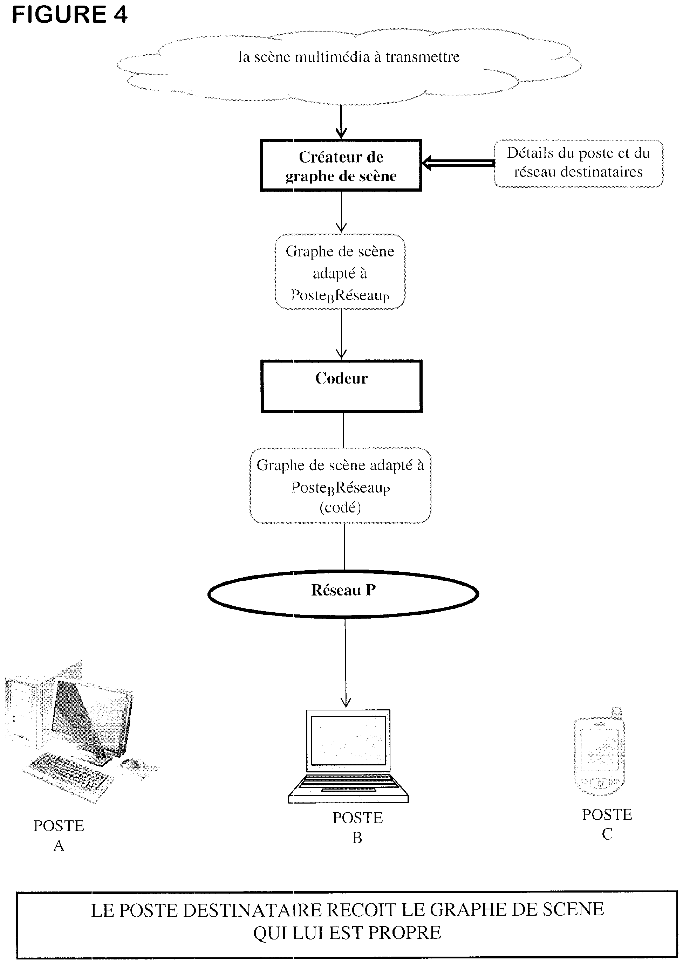

Une troisième approche possible consisterait à créer un graphe de scène sur mesure, c'est-à-dire de créer le graphe de scène en fonction des propriétés du poste et du réseau destinataires (voir à la Figure 4). Or, quand on souhaite transmettre la même scène à plusieurs postes dont les propriétés sont différentes et on prévoit de diffuser les graphes de scène via des réseaux différents, il faut commander le créateur de graphe de scène de manière à créer autant de graphes de scène que de combinaisons poste/réseau visés. En outre, si l'on souhaite adapter le graphe de scène aux propriétés du canal de transmission alors il faut créer un nouveau graphe de scène à chaque fois que les propriétés de ce canal de transmission changent. Ceci revient, encore une fois, à augmenter la charge de travail du créateur de graphes de scène. Par ailleurs, selon cette troisième approche la latence (temps d'attente avant la fourniture du graphe de scène) augmente.

Une autre approche, enfin, est présentée dans le document "Extending X3D for distributed multimedia processing and control" par Michael Repplinger et al, Web3D '09: Proceedings of the 14th International Conférence on 3D Web Technology, June 2009, pages 61-69.

Les problèmes évoqués ci-dessus surviennent également lors de l'utilisation de technologies de représentation de scène autres que BiFS, c'est-à-dire LASeR, VRML, SVG, et autres.

L'invention prévoit des procédés et des appareils de production et de traitement d'une représentation de scène enrichie unique, indépendante par rapport à ses paramètres individuels d'utilisation, qui permettent d'éviter les inconvénients mentionnés ci-dessus.

Plus particulièrement, l'invention prévoit un procédé de production d'une représentation de scène multimédia enrichie, tel que divulgué dans la revendication 1.

Les stratégies précisées dans une représentation de scène enrichie selon l'invention sont, lors de la création de la scène, indépendantes par rapport aux configurations concrètes d'utilisation, celles-ci n'intervenant qu'ultérieurement, par exemple lors de l'encodage et de la transmission de la scène ; en outre, ces stratégies ne conduisent non plus à une multiplication de certaines sous-graphes pour pouvoir offrir un contenu alternatif supplémentaire pour chaque configuration.

On peut considérer que, selon l'invention, un graphe de scène générique est créer et que la fonction d'adaptation de ce graphe de scène générique à une configuration actuelle (poste/réseau) est reporter à un stade en aval du créateur de graphe de scène.

La présente invention prévoit en outre un dispositif de production d'une représentation d'une scène multimédia comportant une unité de traitement de données de ladite scène apte à produire un graphe de scène représentant ladite scène, tel que divulgué dans la revendication 5.

Selon l'invention on associe à un graphe de scène des données qui identifient un sous-graphe (qui peut, le cas échéant, correspondre à l'intégralité du graphe) susceptible de subir au moins un procédé de codage variable en fonction d'au moins un paramètre (comme, par exemple, la bande passante effective du réseau ou le dispositif d'affichage de l'utilisateur). Une représentation de scène enrichie unique peut, donc, être partagée de manière efficace entre des clients ayant des capacités différentes, et ou bien par des voies de transmission de ressources différentes. Par exemple, dans le cas où l'on souhaite transmettre une scène multimédia à plusieurs clients dont les capacités en termes de matériel sont différentes, et ou bien qui sont connectés à travers des réseaux différents, la représentation de scène enrichie identifie les éléments qui pourraient subir des traitements différents (par exemple pour prendre en compte les capacités des dispositifs destinataires). Néanmoins, l'invention se délimite par rapport à la deuxième approche mentionnée ci-dessus par le fait qu'elle garde sensiblement la même structure et complexité pour le graphe de scène et ne demande pas la multiplication de certains sous-graphes pour pouvoir offrir la même fonctionnalité dans des configurations différentes.

Avantageusement les données d'identification servant à identifier ledit sous-graphe et/ou bien les données définissant chaque stratégie de codage variable constituent des nœuds respectifs du graphe de scène. De cette manière les données de représentation enrichie selon l'invention peuvent être traitées même par des dispositifs récepteurs classiques.

Avantageusement, l'invention est également caractérisée en ce que le procédé de codage variable susceptible d'être appliqué audit sous-graphe consiste en un traitement dépendant des propriétés d'un canal de transmission de données et/ou bien d'un appareil de restitution de la scène multimédia et/ou du profil de son utilisateur.

Avantageusement, l'invention est également caractérisée en ce que l'information nécessaire à la mise en œuvre du procédé de codage variable dudit sous-graphe est embarqué dans le graphe représentant la scène.

L'invention prévoit en outre un procédé de traitement d'une représentation d'une scène multimédia représentée par un graphe de scène, tel que divulgué dans la revendication 9.

L'étape de codage n'est pas destinée à une simple sélection parmi l'ensemble fini des choix possibles préétablis lors de la création de la scène, mais comporte une dimension calcul, à travers laquelle la représentation générale est instanciée selon la configuration concrète de travail.

L'invention concerne également un dispositif de traitement d'une représentation d'une scène multimédia représentée par un graphe de scène, tel que divulgué dans la revendication 13.

Le procédé et le dispositif de traitement évoqués ci-dessus peuvent mettre en œuvre le rendu de la scène multimédia conformément à sa représentation de scène enrichie.

Les avantages et les caractéristiques indiqués ci-dessus, ainsi que d'autres, apparaîtront plus clairement à la lecture de la description ci-dessous de certains modes de réalisation de l'invention, donnés à titre d'exemples illustratifs mais nullement limitatifs, et illustrés en se référant aux dessins en annexe, dans lesquels:
- la Figure 1 représente un exemple d'un système de création et de diffusion de graphes de scène utilisant un schéma de codage statique;
- la Figure 2 représente des exemples de systèmes de création et de diffusion de graphes de scène selon des schémas de codage qui prennent en compte toutes les configurations (postes/réseaux) possibles, dans laquelle :
   - la Figure 2(a) représente un système selon lequel chaque poste client sélectionne le graphe de scène qui lui est propre, et
   - la Figure 2(b) représente un système selon lequel le graphe de scène approprié au client est sélectionné avant transmission;
- la Figure 3 représente un exemple d'utilisation d'un nœud switch, selon la deuxième approche mentionnée ci-dessus, pour permettre l'adaptation d'une scène aux capacités du poste destinataire de celui-ci, dans laquelle :
   - la Figure 3(a) représente un système employant le nœud Switch, et
   - la Figure 3(b) représente un exemple du nœud Switch, cet exemple étant exprimé en format BT (un format textuel de BiFS);
- la Figure 4 représente un exemple d'un système de création et de diffusion de graphes de scène selon un schéma de codage selon la troisième approche mentionnée ci-dessus;
- la Figure 5 représente sous forme d'organigramme les principales étapes d'un procédé connu (par exemple, basé sur le node « switch ») de production de données de représentation de scène adaptées à différentes contraintes imposées par l'environnent (par exemple les propriétés de la voie de transmission);
- la Figure 6 représente sous forme d'organigramme les principales étapes d'un procédé de production d'une représentation d'une scène multimédia conforme à un mode particulier de réalisation de l'invention et les principales étapes d'un procédé de traitement d'une représentation d'une scène multimédia conforme à un mode particulier de réalisation de l'invention ;
- la Figure 7 représente sous forme d'organigramme les principales étapes de de procédés de production et de traitement de représentation de scènes multimédias dans un mode particulier de réalisation de l'invention constituant une extension de la norme BiFS ;
- la Figure 8 est un graphique servant à illustrer une arborescence de scène partagée par deux dispositifs, avant et après l'application d'un traitement adaptif au nœud 1 selon le mode de réalisation de la Figure 7 ;
- la Figure 9 représente un exemple d'utilisation de l'invention dans le cadre du mode de réalisation de la Figure 7, cet exemple étant exprimé en format BT et faisant valoir l'emploi de types de nœuds nouveaux « AdaptivityControl » et « ImageCompressionStrategy » ;
- la Figure 10 représente un autre exemple de l'utilisation de l'invention dans le cadre du mode de réalisation de la Figure 7, cet exemple étant exprimé en format SVG (cf. la norme LASeR) et faisant valoir l'emploi d'un type de nœuds nouveau « AdaptivityControl »;
- la Figure 11 représente un mode de réalisation selon lequel la condition du contrôle d'adaptativité change de manière dynamique en fonction d'un facteur externe tel qu'un gestionnaire de réseau ou bien le client ; et
- la Figure 12 représente de manière schématique les composants d'un dispositif de création d'un graphe de scène enrichi conforme à un mode de réalisation de l'invention.

Avant de décrire certains modes de réalisation de l'invention il convient d'exposer les bases théoriques de l'invention, notamment en expliquant comment les étapes d'un procédé selon l'invention se différencient des étapes d'un procédé connu selon lequel des données de représentation de scène sont produites pour prendre en compte un certain nombre de contraintes.

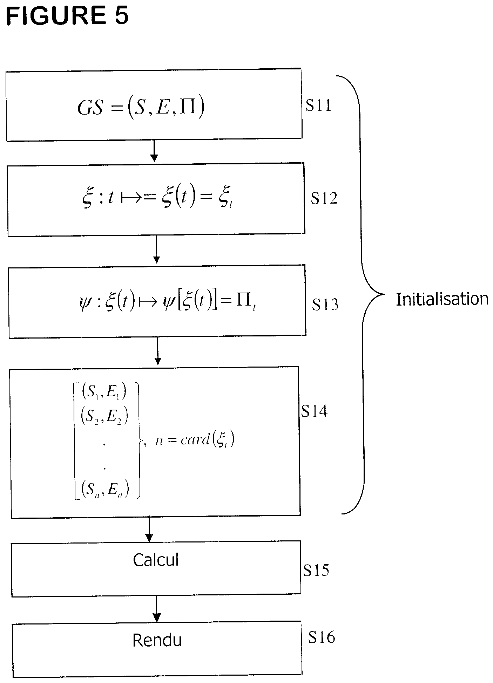

Tout d'abord les étapes d'un procédé connu seront expliquées en relation avec l'organigramme de la Figure 5.

Etape S11 : des techniques connues sont appliquées pour traiter une scène multimédia afin de produire un graphe de scène (GS), comportant un ensemble de nœuds (S) et des relations (E) qui associent les nœuds entre eux, ces relations mettant en jeu certains paramètres (Π).

Etape S12 : lorsqu'on cherche à pouvoir adapter le traitement en fonction des capacités d'un dispositif destinataire des données (ou, plus généralement, en fonction de toute contrainte provenant de l'environnement ou même d'autres composantes de la scène), il convient de considérer un espace défini par l'ensemble de toutes les contraintes possibles qui seront appliquées au graphe de scène. Selon les première et deuxième approches mentionnés ci-dessus, l'espace de ces contraintes doit être a priori connu. Bien que les contraintes provenant de l'environnement soient définies sous forme de fonctions ξ(t) dépendant du temps, elles se retrouvent dès la création de la scène à travers leurs instanciations concrètes. Dans l'application réelle, ces contraintes peuvent être liées à différents facteurs, comme par exemple la bande passante du réseau pour assurer une compression adaptative ou le profil de l'utilisateur lors de l'implantation d'un compagnon multimédia pour des personnes handicapées.

Etape S13 : Afin de pouvoir appliquer les contraintes au graphe, les paramètres de la scène sont fixés du côté du dispositif de production de la scène en fonction de quelques stratégies. Reprenant les exemples antérieurs, ces stratégies peuvent renvoyer à la sélection d'un certain algorithme de compression (comme, png ou jpg) ou à la suppression de la composante audio pour les malentendants. On peut également considérer ici le cryptage par des clés uniques pour chaque utilisateur, le contrôle parental, etc. Il convient de considérer toutes les valeurs possibles des fonctions ψ(ξ(t)).

Etape S14 : Afin d'être préparé à toute configuration susceptible de se produire, il convient de créer autant: de graphes (ou des sous-graphes) de scène ((S₁,E₁), (S₂,E₂),...) que de configurations possibles dans l'espace de contraintes. La notion d'espace de contraintes couvre, selon l'application, des réalités différentes. Par exemple, dans une application de compression, cet espace est constitué de toutes les combinaisons possibles entre les bandes passantes des réseaux à travers lesquels le contenu peut être transmis, les terminaux sur lesquels le contenu peut être rendu et les types de contenus auxquels divers utilisateurs sont autorisés à accéder.

Etape S15 : Selon les contraintes qui s'appliquent dans la pratique (par exemple la valeur de la largeur de bande de la voie de transmission utilisée pour transmettre les données de représentation de scène, une fois codées, ou les propriétés du dispositif de restitution), on choisit le graphe de scène qui correspond le mieux à ces contraintes, ce choix étant réalisé soit au niveau du poste client (Fig.2(a)) soit avant la transmission des données (Fig.2(b)). Cela correspond à la mesure de la valeur actuelle des ξ(tᵢ) et la sélection du couplet (Sᵢ, Eᵢ) correspondant.

Etape S16 : la scène est restituée par le dispositif de restitution à partir du graphe de scène adapté reçu (Sᵢ, Eᵢ).

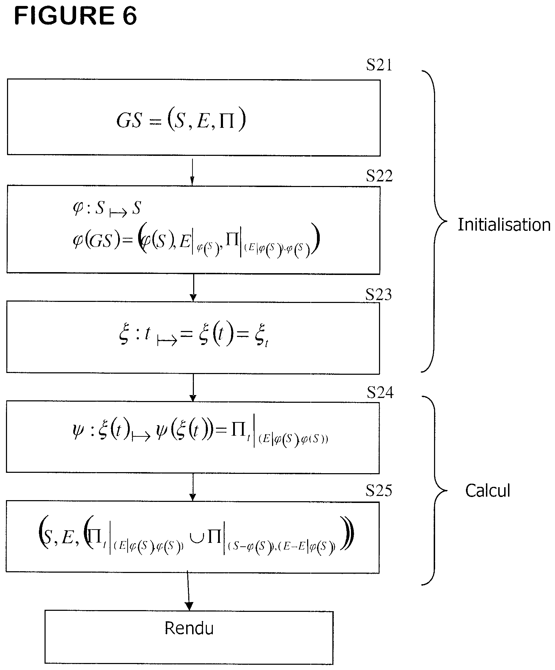

Maintenant les étapes des procédés de production et de traitement selon l'invention seront expliquées dans un exemple en relation avec l'organigramme de la Figure 6.

Etape S21 : des techniques connues sont appliquées pour traiter une scène multimédia afin de produire un graphe de scène initiale (GSI), comme dans l'étape S11.

Etape S22 : on identifie les éléments de la scène qui pourraient être soumis à un traitement variable (par exemple pour des raisons d'adaptation à des contraintes) et ceux qui devraient subir un traitement fixe. Par exemple, quand on veut traiter une page www de type YouTube, souvent on souhaite, sans tenir compte des propriétés de la voie de transmission et/ou bien du dispositif destinataire de la scène, utiliser un seul type de codage en relation avec le texte qui fait partie d'une scène multimédia, tandis qu'un traitement variable en relation avec des images/vidéo dans la scène permettra d'obtenir des images/vidéo de la meilleure résolution possible au moment du rendu. Toujours à titre d'exemple, si on considère maintenant le rendu sur un terminal léger (téléphone portable), les outils permettant la navigation haptique peuvent être désactivés pendant que leur utilisation sur un terminal intelligent accroît d'une façon significative le confort de l'utilisateur. L'élément (ou bien les éléments) que l'on souhaite pouvoir soumettre à un traitement variable est (sont) sélectionné(s). Ceci correspond à la sélection d'un sous-graphe du graphe de scène.

Le sous-graphe de scène est défini sous forme d'une fonction *ϕ* : *S* ↦ *S* qui identifie un sous-ensemble de S, la restriction de E à ce sous-ensemble, ainsi que le sous-ensemble de paramètres Π|_{(E|ϕ(S)),ϕ(S)} de l'ensemble initial Π. Il s'agît donc d'une représentation unitaire et générale, indépendante par rapport aux diverses configurations concrètes qui peuvent être rencontrées lors du traitement de la scène.

Il convient de rappeler qu'un sous-graphe peut correspondre à l'intégralité du graphe de scène initiale.

Etape S23 : On considère l'espace de toutes les contraintes possibles. Les contraintes sont définies sous forme de fonctions ξ(t) du temps. Selon l'invention, cette étape ne nécessite pas, lors de la création de la scène, la connaissance des conditions concrètes de traitement.

Etapes S24 et S25: Afin d'appliquer les contraintes au sous-graphe, on utilise certaines fonctions afin de modifier les paramètres de la scène, ces fonctions décrivant de façon mathématique les stratégies de modification. La réalisation de cette étape de calcul peut être mise en œuvre par l'équipement producteur de la scène, par l'équipement transmetteur de la scène, par l'équipement récepteur de la scène ou bien par un équipement du réseau (plus généralement, quelque part entre la production de la représentation de scène enrichie et le rendu de celle-ci), selon l'application visée. Les fonctions ψ[ξ(t)] sont calculées, ainsi que le graphe de scène adapté correspondant.

Etape S26 : La scène multimédia est restituée au niveau de l'équipement récepteur à partir du graphe de scène adapté.

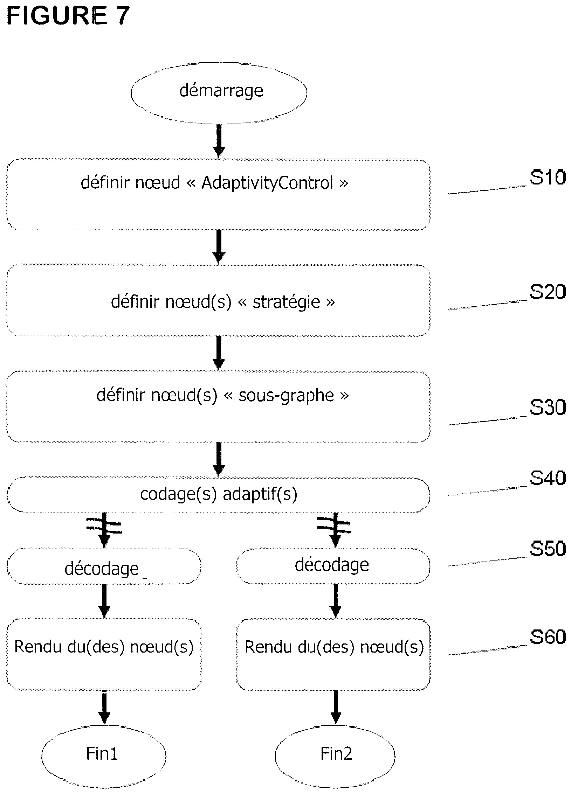

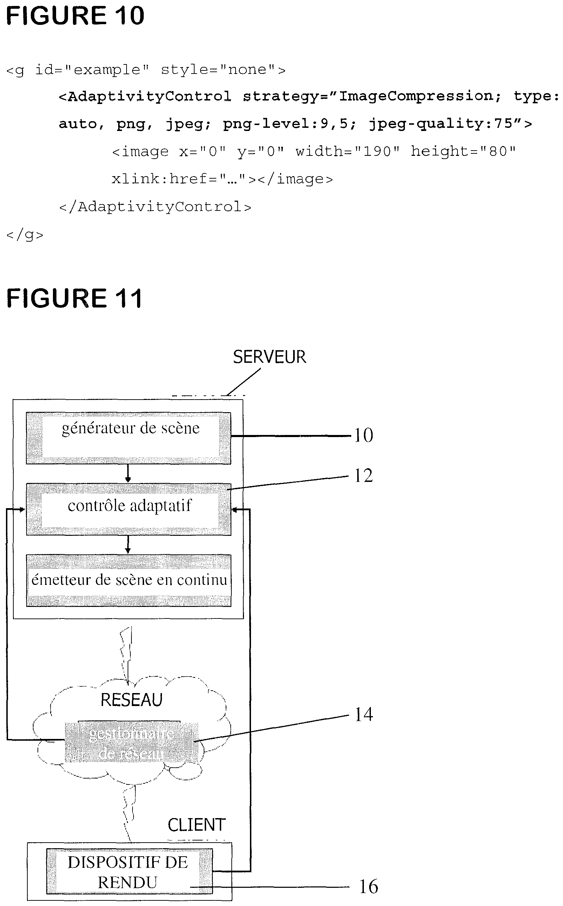

On décrit maintenant, en relation avec les Figures 7, 8, 9 et 11, un mode de réalisation de l'invention selon lequel on réalise une extension de BiFS afin de définir deux nouveaux types de nœud qui serviront à l'enrichissement de la représentation de scène. Un nouveau type de nœud, que l'on va désigner par « AdaptivityControl » (c'est-à-dire « contrôle d'adaptativité »), permet d'identifier le sous-graphe susceptible d'être soumis à un traitement variable (d'adaptation, dynamique). Le deuxième nouveau type de nœud, ici désigné par « StrategyNode » (c'est-à-dire « nœud de stratégie ») définit les détails du traitement (variable) à effectuer. Il convient de noter que l'adaptation de ce mode de réalisation à de protocoles/formats/langages autres que BiFS relève des compétences de l'homme du métier, comme montre, par exemple, l'adaptation au format LASeR illustrée dans la Figure 10.

Selon le présent mode de réalisation, un nœud de type « AdaptivityControl » est lui-même le parent du sous-graphe choisi et il contient une liste ordonnée de noeuds qui donnent les stratégies du traitement variable.

La liste de stratégies peut être mise à jour par modification, ajout ou suppression, de manière dynamique en employant les mises à jour de scène classiques. Chaque stratégie a son propre nœud dont le type détermine la logique de la stratégie. Les champs de chacun de ces noeuds donnent les paramètres du traitement variable.

Lorsqu'un nœud « AdaptivityControl » est traité par un codeur, ses stratégies sont appliquées au sous-graphe concerné de manière récursive. Un décodeur d'un terminal léger peut prendre en compte l'existence d'un nœud « AdaptivityControl » afin de traiter le contenu de la scène de manière adaptive.

En tant qu'exemple d'une stratégie possible on peut citer un traitement adaptif qui sert à comprimer une image. Le nœud correspondant sera désigné « ImageCompressionStrategy » ; il sert à fournir une liste des types de compression préférés en relation avec des paramètres de compression spécifiques à chacun de ces types. On peut définir parmi les types de compression un type « auto » qui sert à coder une image de manière adaptive en effectuant une compression adaptée pour chacun des clients. On peut étendre le groupe de types permis.

Il est possible de définir d'autres stratégies, par exemple des stratégies associées à des types de contenu spécifiques (vidéo, 3D, son) ou bien des stratégies associées à des traitements complexes. Outre les exemples déjà cités (cryptage, contrôle parental, commande et navigation haptique, compagnon multimédia pour les personnes handicapées), on peut également mentionner ici les modifications induites dans la scène en fonction de diverses conditions environnementales du terminal, comme la luminosité moyenne, la température ou bien son orientation.

L'utilisation de ces nouveaux types de nœud afin d'enrichir une scène ajoute à la phase de traitement un degré de souplesse inconnu jusqu'ici.

Du fait de cette souplesse, on obtient en matière de transmission, de partage et de réutilisation de contenu multimédia des avantages par rapport aux techniques actuels, tels que :
- un codage adaptif d'une arborescence de scène unique pour des clients différents, en fonction des capacités (matériel/logiciel) du client et/ou bien en fonction du profil du client et/ou bien en fonction des propriétés de la liaison servant à la transmission des données au client;
- une seule décompression de données (par exemple, des images) comprimées suffit lors de la réutilisation côté récepteur ;
- la gestion de scène est simplifiée puisqu'on évite de multiplier les nœuds quand des codages multiples sont nécessaires ;
- il n'y a qu'un point de commande pour la réalisation de la mise à jour d'une scène complexe ;
- les paramètres du traitement peuvent être mis à jour de manière dynamique ; et
- cette souplesse accrue est obtenue sans augmentation de la complexité côté client.

L'organigramme de la Figure 7 comporte les étapes suivantes montrant comment l'on peut exploiter l'invention en relation avec une scène ;
S10: création d'un nouveau nœud « AdaptivityControl » et on place celui-ci dans le graphe de scène ;
S20: création d'au moins un nœud de stratégie, selon le comportement que l'on souhaite obtenir lors du traitement, ce nœud étant spécifié en tant que stratégie se rapportant au noeud « AdaptivityControl » ;
S30: création du sous-graphe qui devrait être traité selon les stratégies et placement de celui-ci comme fils du nœud « AdaptivityControl » ;
S40: le sous-graphe est traité selon un codage adaptif conforme aux stratégies faisant partie de la liste de stratégies. Le traitement adaptif peut coder un nœud simple de manière appropriée en fonction des capacités du client, de l'état actuel du réseau et/ou bien en fonction de toute autre contrainte d'intérêt pour l'application (type de souscription, état de consommation de la batterie, profil utilisateur, etc);
S50: le contenu est soumis à un procédé de décodage complémentaire au codage appliqué, et le sous-graphe correspondant est produit ;
S60: le rendu du sous-graphe est réalisé et l'affichage correspondant a lieu en relation avec la reproduction éventuelle de l'audio approprié.

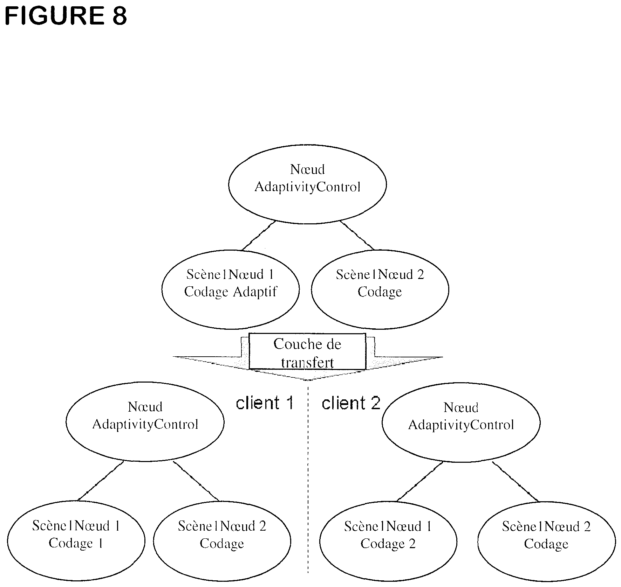

En relation avec la Figure 8, on présente un exemple d'un traitement adaptif d'une scène selon une stratégie. Dans cet exemple deux noeuds sont traités de manière différente. Le traitement du Noeud1 (qui correspond, par exemple à une image à haute résolution) dépend de la stratégie définie en relation avec le nœud « AdaptivityControl » : dans cet exemple le Client 1 et le Client 2 recevront des données codées différemment en fonction de leurs capacités. Le traitement du Noeud2 (par exemple un nœud qui comporte du texte) n'est pas concerné par la stratégie et subit un traitement classique.

On va par la suite décrire plus en détails les nœuds. Les descriptions qui suivent sont conformes à la spécification de la norme BiFS. L'obtention de descriptions correspondantes selon d'autres technologies est immédiate pour un homme du métier.

### AdaptivityControl

Ce nœud est représenté à l'annexe 1 ; il correspond à un exemple d'une manière de préciser et d'identifier les parties d'une scène (nœud, sous-graphe, graphe) que l'on a l'intention de soumettre à un traitement adaptif ainsi qu'une manière de signaler les stratégies qui seront appliquées pour réaliser le traitement de ces parties. La première de ces fonctions est assurée par le champ Node (« nœud ») de type SFNode tandis que la seconde est assurée par le champ Stratégies (« stratégies ») de type MFNode.

Le champ Node (« nœud ») comporte le nœud supérieur du sous-graphe qui sera traité de manière adaptive. Le champ Stratégies « stratégies » contient une liste de tous les nœuds de stratégie que l'on devrait appliquer au sous-graphe. Les champs addStrategy (« ajouter stratégie ») et removeStrategy (« supprimer stratégie »), de type MFNode, sont employés pour ajouter des noeuds à la liste de stratégies et pour en supprimer en employant des méthodes connues utilisées lors du groupement de nœuds tels que Group ou OrderedGroup.

### ImageCompressionStrategy

Ce type de nœud est représenté dans l'annexe 2 ; il décrit les paramètres d'un exemple spécifique de stratégie employée pour effectuer un traitement adaptif (c'est-à-dire transmission des images comprimées), et a comme vocation d'être inséré dans une liste de stratégies d'un nœud « AdaptivityControl » (ou autre nœud de ce genre).

Cette stratégie particulière modifie la façon dont les images sont codées en précisant une liste de types de compression possibles ainsi que leurs paramètres associés.

Le champ « compressionType » est une liste de chaînes de données. Chaque élément est une stratégie de compression possible que l'on pourrait utiliser pour coder le contenu (en termes d'image) d'une partie de la scène. Le contenu par défaut de cette liste est « auto » : de cette manière le codeur peut choisir un type de compression approprié en fonction des contraintes mesurées à un certain moment.

En relation avec chaque type de compression on définit un élément de la liste « compressionParams » ; il contient la liste des paramètres éventuels qui seront employés en relation avec ce type de compression particulière. Le type « auto » n'a pas besoin de paramètres.

### Exemple d'utilisation

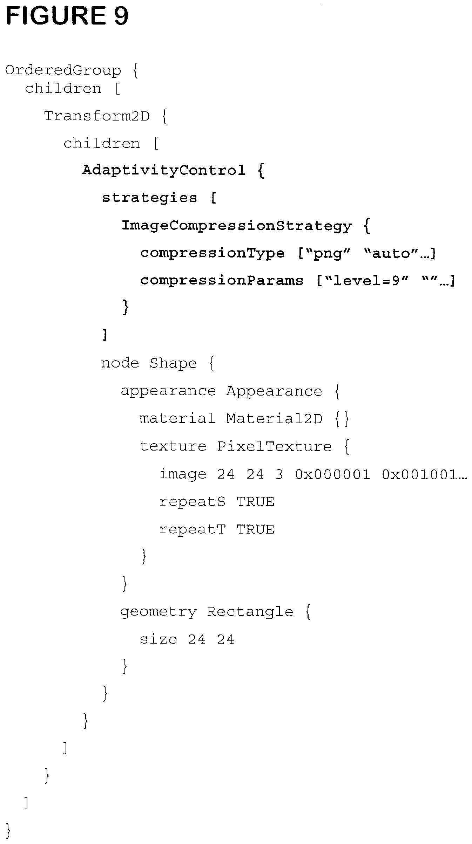

Du point de vue multimédia, la Figure 9 représente une façon d'intégrer en BiFS les deux types de nœuds afin de réaliser un codage adaptif de contenu de type image dans un nœud particulier PixelTexture.

Après la création d'un nœud « AdaptivityControl », il s'ensuit une hiérarchie classique de nœuds nécessaires pour placer une image sur la scène (des nœuds « Shape », « Appearance », « Material2D », « PixelTexture »). Un nouveau nœud « ImagecompressionStrategy » est crée dans la liste des stratégies du nœud « AdaptivityControl ». Le nœud « PixelTexture », en tant qu'élément du sous-graphe commandé par le nœud « AdaptivityControl », est affecté par la stratégie que l'on applique en tant que traitement de compression de données d'image.

Du point de vue fonctionnel, trois mécanismes réalisent le codage dynamique adaptif. Premièrement, un même contenu de scène devrait être perçu par deux clients différents qui disposent de ressources informatiques/d'affichage différentes, le nœud étant traité différemment/de manière adaptive en relation avec chaque utilisateur. Deuxièmement, les ressources informatiques/d'affichage d'un même utilisateur peuvent varier dans le temps (par exemple on lance une deuxième application sur ce client, réduisant ainsi les ressources disponibles du processeur). Enfin, il est probable que des modifications des conditions s'appliquant au réseau surviendront au cours de la perception du contenu par l'utilisateur. Ces trois mécanismes seront convertis en un jeu de paramètres contrôlant l'adaptation.

Comme on peut le constater à partir de la Figure 9, par rapport à la solution illustrée à la Figure 3(b), l'invention permet l'adéquation d'une scène aux divers terminaux/réseaux sans changement important de la structure ou bien la complexité du graphe de scène. Selon cet exemple on voit, notamment, qu'il n'est pas nécessaire d'envoyer à chague client l'ensemble des différentes versions possibles de l'image.

Bien que cet exemple exploite le type de nœud « PixelTexture » déjà existant, l'invention peut se rapporter à tout autre nœud BiFS. Par ailleurs, comme on l'a indiqué ci-dessus, l'invention ne voit pas son application limitée à la norme BiFS, on peut appliquer celle-ci en relation avec d'autres normes aussi bien qu'avec des approches non normalisées.

Toujours à titre d'illustration, la Figure 10 présente la manière dont une partie d'une image peut être compressée d'une façon adaptative dynamique en LASeR. A l'intérieur du groupe identifié par l'id « exemple », le nœud « AdaptivityControl » est défini. Ce nœud contient une stratégie « ImageCompression » vouée au codage des images. Trois types de codage sont possibles : « auto », « png », « jpg ». Ces algorithmes de codage peuvent être appliqués avec différents paramétres décrits par « png-level » ou « jpeg-quality ». L'image qui fait l'objet de ce traitement est référencée par le nœud image déjà existant dans LASeR qui précise l'id de l'image (le champ xlink :href) ainsi que les coordonnées dans la scène (les champs « x », « y », « width » et « high ») où l'image doit être rendue.

Le rendu côté client qui permet de visionner (ou bien d'interagir avec) les représentations produites selon les modes de réalisation de la présente invention peuvent être de natures variées : par exemple, un plugin dans un navigateur, un logiciel spécifique de traitement de représentations, un module qui fait partie du système d'exploitation, une adaptation spéciale au niveau du matériel (« hardware »). L'invention n'est pas limitée par rapport à la nature des moyens de rendu.

La Figure 11 montre de manière schématique un mode de réalisation d'un système selon l'invention dans lequel un serveur fourni à ses clients, au moyen d'un réseau, des données représentant une scène. Selon ce mode de réalisation, côté serveur un générateur de scène 10 génère une représentation de scène enrichi conforme à l'invention et une unité de contrôle adaptatif 12 réalise le traitement variable qui s'impose en fonction des informations reçues de la part du dispositif de rendu 16 côté client ainsi que de la part d'un gestionnaire 14 du réseau. Bien entendu, comme indiqué ci-dessus, l'invention n'est pas limitée au cas où l'adaptation se fait au niveau du serveur.

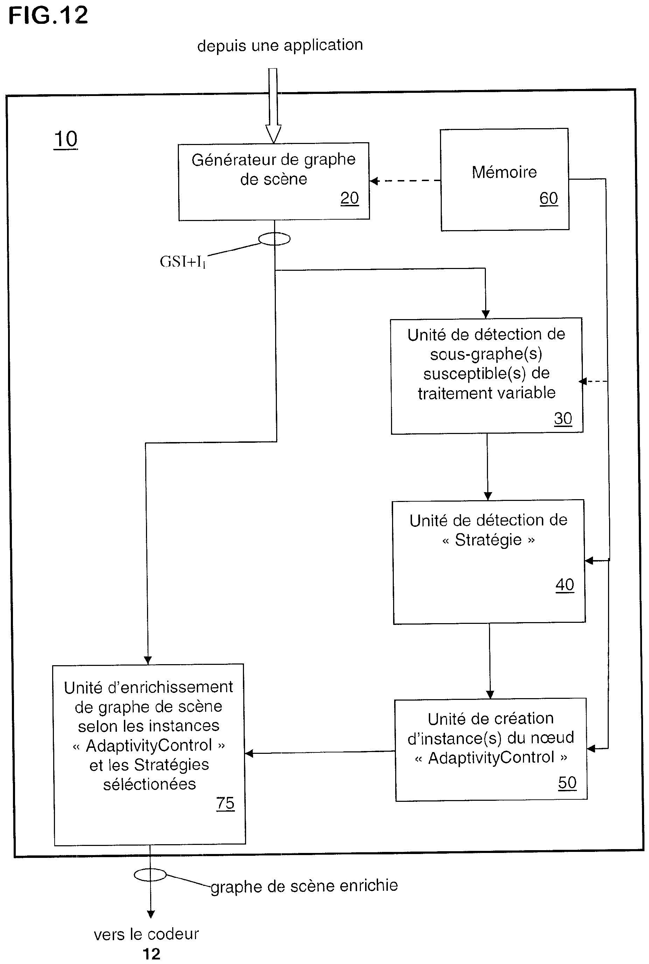

La Figure 12 montre de manière schématique un mode de réalisation du générateur de scène 10 de la Figure 11.

Un module générateur de graphe de scène 20 traite les données provenant d'une application afin de définir un graphe de scène initiale. Divers procédés classiques sont utilisés dans ce domaine pour définir un graphe de scène afin de représenter des données provenant d'une application et l'invention n'est pas particulièrement limitée par rapport aux procédés que peuvent employer le générateur de graphe de scène 20. Toutefois, à la différence des dispositifs générateur de graphe de scène connus, le module 20 est configuré pour détecter les parties du graphe de scène qui pourraient, éventuellement, subir un traitement variable lors du codage (par exemple en fonction du profil d'un client).

Cette fonction de détection se repose sur des critères qui souvent sont définis par avance et qui dépendent, par exemple, des choix du concepteur. Par exemple, lorsqu'on souhaite permettre un codage de données vidéo sous un nombre de bits variable selon le profil d'un client, alors le module générateur de graphe de scène 20 applique une règle qui sert à détecter les parties du graphe (par exemple, des noeuds) qui correspondent à des flux de données vidéo. Un autre exemple, se rapportant à la réalisation d'une fonction de cryptage selon laquelle l'on crypte certaines données faisant partie de la scène en fonction de clés différentes, implique l'application par le module générateur de graphe de scène 20 d'une règle qui sert à définir quelles données sont concernées par ce cryptage variable.

Il y a diverses manières d'informer le module générateur de graphe de scène 20 des critères qu'il convient d'appliquer lors de la mise en œuvre de la fonction de détection mentionnée ci-dessus : par exemple, les données définissant les critères appropriés peuvent être stockées à l'intérieur de ce module 20 ou stockées au niveau d'une mémoire 60 qui lui est externe (d'où la flèche en pointillés dans la Figure 12), ou bien on peut prévoir une configuration dynamique selon laquelle au moment de la création du graphe de scène initiale le module générateur de graphe de scène 20 obtient les critères nécessaires à cet étape de détection (par exemple, de la part d'un contrôleur humain ou informatique).

Bien entendu un seul graphe de scène peut comporter plusieurs éléments qui sont susceptibles de traitements variables et qui sont repérés par le module générateur de graphe de scène 20 en appliquant des critères différents.

Le module générateur de graphe de scène 20 produit une information I₁ qui sert à identifier les parties du graphe de scène initiale qui sont susceptibles à subir un traitement variable. Cette information I₁ indique non seulement les éléments du graphe de scène initiale qui peuvent subir un traitement variable mais également identifie le traitement respectif concerné (par exemple, en utilisant des identifiants prédéfinis). Le format de l'information I₁ n'est pas particulièrement limité : on peut prévoir un seul bloc de données qui comporte tous les renseignements nécessaires en relation avec le graphe de scène initiale, un bloc de données respectif pour chaque l'élément de la scène qui peut subir un traitement variable, ou tout autre format convenable.

Le module générateur de graphe de scène 20 associe l'information I₁ au graphe de scène initiale et les données résultantes sont émises en sortie. A la sortie du générateur du graphe de scène 20, les éléments du graphe de scène initiale qui sont candidats de transformation sont détectés par un module 30 à partir de l'information I₁, pour introduction dans un bloc 40 effectuant l'association avec les stratégies qui sont prédéfinies en relation avec le traitement variable concerné (ou bien les traitements variables concernés).

Il existe plusieurs manières de fournir au bloc 40 les détails des stratégies qui se rapportent aux différents traitements variables prévus: par exemple, ces détails peuvent être stockées dans la mémoire 60 lors d'une phase préalable de configuration de l'appareil 10, ou bien on peut prévoir une configuration dynamique selon laquelle le bloc 40 obtient les détails des stratégies (par exemple, de la part d'un contrôleur humain ou informatique) au moment de l'association des stratégies aux éléments du graphe de scène.

En fonction de ces stratégies, les nœuds correspondant de type « AdaptivityControl » sont instanciés par un bloc 50. En effet le bloc 50 réalise des calculs pour mettre en œuvre les décisions prises par le bloc 40. L'information nécessaire au fonctionnement de ce bloc 50 est obtenue de la même façon que celle nécessaire pour le bloc 40. Le graphe enrichi final est obtenu en sortie d'un dispositif d'enrichissement du graphe 75 qui combine les instances «AdaptivityControl» et les stratégies sélectionnées avec les éléments du graphe de scène initiale qui ne vont pas subir de traitement variable. Cette intégration peut se faire en remplaçant dans le graphe de scène initiale GSI (produit par le module 20) les éléments susceptibles de traitement variable par leurs versions adaptées produites en sortie du bloc 50. Cette approche assure une compatibilité inverse avec les dispositifs de codage et les postes client connus.

La mémoire 60 de contrôle des opérations des blocs 30 à 50 (et, éventuellement, du bloc 20) reçoit ses informations en provenance des dispositifs de configuration (qu'elle soit manuelle où automatisée).

La configuration du générateur de scène 10 selon l'exemple décrit ci-dessus correspond à l'une des différentes manières possibles de repartir des fonctions destinées à produire un graphe de scène enrichi conformément à l'invention. L'homme du métier saura que les fonctions énoncées peuvent être réalisées en faisant appel à des modules de nombre et/ou bien de nature différents de ceux de la Figure 12. Par exemple, la fonction de détection des parties de la scène qui correspondent à des éléments qui peuvent subir un traitement variable, réalisé par le module 20 de la Figure 12, peut être accompli par le module 30. Dans ce cas, ce module doit disposer d'une information supplémentaire, fournie par la mémoire 60 (cf. la flèche en pointilles).

Bien que des modes de réalisation particuliers de la présente invention aient été décrits ci-dessus, l'homme du métier comprendra que diverses modifications et aménagements peuvent se pratiquer dans ceux-ci sans sortir du cadre de la présente invention définie par les revendications.

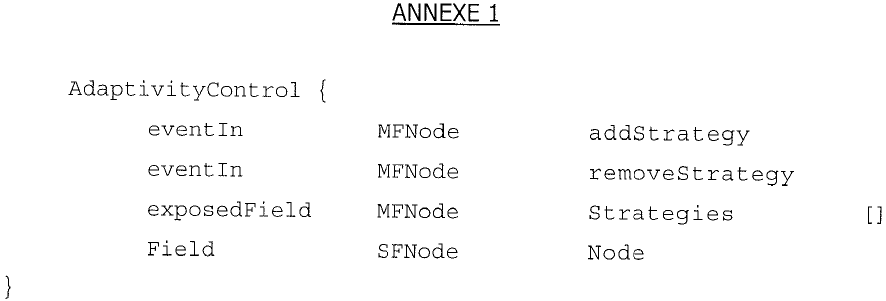

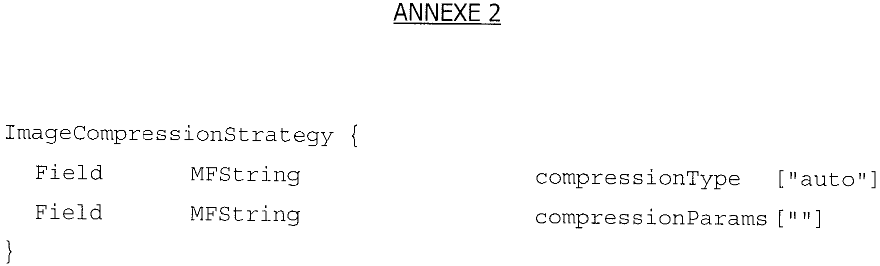

## Revendications

1. Procédé de production d'une représentation d'une scène multimédia, ce procédé comportant une étape de traitement de données de ladite scène permettant de produire un graphe de scène représentant ladite scène, ledit graphe de scène (GS) comportant un ensemble de nœuds (S) et des relations (E) qui associent les nœuds (S) entre eux, ces relations (E) mettant en jeu des paramètres (Π), ce procédé comportant :-
- une étape d'identification (S22) d'au moins un sous-graphe dudit graphe de scène, ledit sous-graphe étant destiné à subir un procédé ultérieur de codage susceptible de varier en fonction de la configuration d'utilisation du graphe de scène, la configuration d'utilisation du graphe de scène définissant un jeu de contraintes (ξ(t)) comportant au moins un paramètre d'utilisation sélectionné dans le groupe consistant en : au moins un paramètre indiquant une capacité d'un poste destiné à restituer la scène, au moins un paramètre indiquant une propriété d'un réseau de transmission destiné à transmettre le graphe de scène vers ledit poste, et au moins un paramètre d'un profil de l'utilisateur dudit poste,
- une étape (S10) au cours de laquelle on ajoute, audit graphe de scène, des données d'identification dudit sous-graphe unitaire qui sont aptes à indiquer que ledit sous-graphe unitaire est susceptible d'adaptation ultérieure, et
- une étape (S20) au cours de laquelle on ajoute audit graphe, des données de stratégie définissant au moins une stratégie de codage variable du sous-graphe identifié par les données d'identification, ladite au moins une stratégie définissant comment ledit procédé ultérieur de codage variable variera en fonction de la configuration concrète d'utilisation,
**caractérisé en ce que** :
l'étape d'identification (S22/S30) identifie un sous-graphe défini sous forme d'une fonction *ϕ*:*S*↦*S* qui identifie un sous-ensemble de S, la restriction de E à ce sous-ensemble, ainsi qu'un sous-ensemble de paramètres Π|_{(E|ϕ(S)),ϕ(S)} de l'ensemble initial Π et qui, donc, est une représentation unitaire et générale, indépendante par rapport aux diverses configurations concrètes qui peuvent être rencontrées lors du traitement de la scène.

2. Procédé de production de représentation de scène selon la revendication 1, **caractérisé en ce que** les données d'identification du sous-graphe constituent un nœud du graphe de scène ou même un sous-graphe.

3. Procédé de production de représentation de scène selon les revendications 1 ou 2, **caractérisé en ce que** lesdites données de stratégie constituent un nœud du graphe de scène.

4. Procédé de production de représentation de scène selon l'une quelconque des revendications 1 à 3, **caractérisé en ce que** le code nécessaire à la mise en œuvre du procédé de codage variable dudit sous-graphe est embarqué dans ledit graphe.

5. Dispositif (10) de production d'une représentation d'une scène multimédia comportant une unité de traitement de données de ladite scène apte à produire un graphe de scène représentant ladite scène, ledit graphe de scène (GS) comportant un ensemble de nœuds (S) et des relations (E) qui associent les nœuds (S) entre eux, ces relations (E) mettant en jeu des paramètres (Π), ce dispositif comportant :
- un moyen d'identification (30) apte à identifier au moins un sous-graphe dudit graphe de scène, ledit sous-graphe étant destiné à subir un procédé ultérieur de codage susceptible de varier en fonction de la configuration d'utilisation du graphe de scène, la configuration d'utilisation du graphe de scène définissant un jeu de contraintes (ξ(t)) comportant au moins un paramètre d'utilisation sélectionné dans le groupe consistant en : au moins un paramètre indiquant une capacité d'un poste destiné à restituer la scène, au moins un paramètre indiquant une propriété d'un réseau de transmission destiné à transmettre le graphe de scène vers ledit poste, et au moins un paramètre d'un profil de l'utilisateur dudit poste,
- un moyen de groupement (50) apte à ajouter audit graphe, des données d'identification aptes à indiquer que ledit sous-graphe est susceptible d'adaptation ultérieure, et
- un deuxième moyen de groupement (40) apte à ajouter audit graphe, des données de stratégie définissant au moins une stratégie de codage variable dudit sous-graphe identifié par les données d'identification, ladite au moins une stratégie définissant comment ledit procédé ultérieur de codage variable variera en fonction de la configuration d'utilisation concrète,
**caractérisé en ce que** le moyen d'identification (30) est configuré pour identifier un sous-graphe défini sous forme d'une fonction *ϕ*:*S*↦*S* qui identifie un sous-ensemble de S, la restriction de E à ce sous-ensemble, ainsi qu'un sous-ensemble de paramètres Π|_{(E|ϕ(S)),ϕ(S)} de l'ensemble initial Π et qui, donc, est une représentation unitaire et générale ne comportant pas de sous-graphes multiples correspondantes aux diverses configurations d'utilisation qui peuvent être rencontrées lors du traitement de la scène.

6. Dispositif (10) de production d'une représentation de scène selon la revendication 5, caractéris en ce que ledit moyen de groupement (50) est apte à introduire dans ledit graphe un nœud servant à identifier ledit sous-graphe.

7. Dispositif (10) de production d'une représentation de scène selon la revendication 5 ou 6, **caractérisé en ce que** ledit deuxième moyen de groupement (40) est apte à introduire dans ledit graphe un nœud représentatif desdites données de au moins une stratégie.

8. Dispositif (10) de production d'une représentation de scène selon l'une quelconque des revendications 5 à 7, **caractérisé en ce qu'**il comporte un moyen pour embarquer, dans ladite représentation de scène, du code permettant la mise en œuvre dudit procédé de codage variable.

9. Procédé de traitement d'une représentation d'une scène multimédia représentée par un graphe de scène, ledit graphe de scène (GS) comportant un ensemble de nœuds (S) et des relations (E) qui associent les nœuds (S) entre eux, ces relations (E) mettant en jeu des paramètres (Π), ce procédé comportant :
- une étape d'identification d'un sous-graphe dudit graphe à partir de données d'identification extraites de ladite représentation de scène, ledit sous-graphe étant destiné à subir un procédé de codage susceptible de varier en fonction de la configuration d'utilisation du graphe de scène, la configuration d'utilisation du graphe de scène définissant un jeu de contraintes (ξ(t)) comportant au moins un paramètre d'utilisation sélectionné dans le groupe consistant en : au moins un paramètre indiquant une capacité d'un poste destiné à restituer la scène, au moins un paramètre indiquant une propriété d'un réseau de transmission destiné à transmettre le graphe de scène vers ledit poste, et au moins un paramètre d'un profil de l'utilisateur dudit poste,
- une étape de détermination de la configuration concrète d'utilisation; et
- une étape de codage (S40) dudit sous-graphe par application d'au moins un procédé de codage prenant en compte la configuration concrète d'utilisation,
**caractérisé en ce que** :
l'étape d'identification identifie un sous-graphe défini sous forme d'une fonction *ϕ*:*S*↦*S* qui identifie un sous-ensemble de S, la restriction de E à ce sous-ensemble, ainsi qu'un sous-ensemble de paramètres Π|_{(E|ϕ(S)),ϕ(S)} de l'ensemble initial Π et qui, donc, est une représentation unitaire et générale ne comportant pas de sous-graphes multiples correspondantes aux diverses configurations d'utilisation qui peuvent être rencontrées lors du traitement de la scène.

10. Procédé de traitement d'une représentation de scène selon la revendication 9, **caractérisé en ce que** l'étape consistant à déterminer la configuration concrète d'utilisation coniste à établir les propriétés d'un canal de transmission dudit graphe et/ou les propriétés d'un appareil destiné à restituer ladite scène multimédia et/ou du profil de son utilisateur.

11. Procédé de traitement d'une représentation de scène selon les revendications 9 ou 10, **caractérisé en ce que** l'étape de codage (S40) dudit sous-graphe comporte une étape au cours de laquelle on extrait dudit graphe, l'information nécessaire à la mise en œuvre dudit procédé de codage.

12. Procédé de traitement d'une représentation de scène selon l'une quelconque des revendications 9 à 11, **caractérisé en ce qu'**il comporte une étape de restitution (S60) de ladite scène multimédia à partir dudit graphe.

13. Dispositif de traitement d'une représentation d'une scène multimédia représentée par un graphe de scène, ledit graphe de scène (GS) comportant un ensemble de nœuds (S) et des relations (E) qui associent les nœuds (S) entre eux, ces relations (E) mettant en jeu des paramètres (Π), ce dispositif de traitement comportant:
- des moyens d'identification d'un sous-graphe dudit graphe à partir de données d'identification extraites de ladite représentation de scène, ledit sous-graphe étant destiné à subir un procédé de codage susceptible de varier en fonction de la configuration d'utilisation du graphe de scène, la configuration d'utilisation du graphe de scène définissant un jeu de contraintes (ξ(t)) comportant au moins un paramètre d'utilisation sélectionné dans le groupe consistant en : au moins un paramètre indiquant une capacité d'un poste destiné à restituer la scène, au moins un paramètre indiquant une propriété d'un réseau de transmission destiné à transmettre le graphe de scène vers ledit poste, et au moins un paramètre d'un profil de l'utilisateur dudit poste,
- des moyens de détermination de la configuration concrète d'utilisation; et
- des moyens de codage dudit sous-graphe par application d'au moins un procédé de codage prenant en compte la configuration concrète d'utilisation,
**caractérisé en ce que** les moyens d'identification sont configurés pour identifier un sous-graphe défini sous forme d'une fonction *ϕ*: *S*↦*S* qui identifie un sous-ensemble de S, la restriction de E à ce sous-ensemble, ainsi qu'un sous-ensemble de paramètres Π|_{(E|ϕ(S)),ϕ(S)} de l'ensemble initial Π et qui, donc, est une représentation unitaire et générale ne comportant pas de sous-graphes multiples correspondantes aux diverses configurations d'utilisation qui peuvent être rencontrées lors du traitement de la scène.

14. Dispositif de traitement d'une représentation de scène selon la revendication 13, **caractérisé en ce que** lesdits moyens de détermination de la valeur dudit paramètre sont aptes à établir les propriétés d'une voie de transmission dudit graphe et/ou bien les propriétés d'un appareil de restitution de ladite scène multimédia.

15. Dispositif de traitement d'une représentation de scène selon les revendications 13 ou 14, **caractérisé en ce que** lesdits moyens de codage dudit sous-graphe utilisent du code extrait dudit graphe.

16. Dispositif de traitement d'une représentation de scène, selon l'une quelconque des revendications 13 à 15, **caractérisé en ce qu'**il comporte un moteur de rendu apte à restituer ladite scène multimédia.

## Patentansprüche

1. Verfahren zur Erzeugung einer Darstellung einer Multimedia-Szene, wobei dieses Verfahren einen Schritt der Verarbeitung von Daten der Szene beinhaltet, der ermöglicht, einen Szenegraphen zu erzeugen, der die Szene darstellt, wobei der Szenegraph (GS) eine Gruppe aus Knoten (S) und Beziehungen (E) beinhaltet, welche die Knoten (S) untereinander verbinden, wobei diese Beziehungen (E) einen Satz von Parametern (Π) einführen, wobei dieses Verfahren beinhaltet:
- einen Schritt der Identifizierung (S22) von zumindest einem Teilgraphen des Szenegraphen, wobei der Teilgraph dazu gedacht ist, ein nachfolgendes Verfahren zur Codierung zu durchlaufen, das abhängig von der Verwendungskonfiguration des Szenegraphen variieren kann, wobei die Verwendungskonfiguration des Szenegraphen einen Satz von Einschränkungen (ξ(t)) definiert, der zumindest einen Verwendungsparameter beinhaltet, der aus der Gruppe ausgewählt ist, bestehend aus: zumindest einem Parameter, der eine Fähigkeit einer Position angibt, die dazu gedacht ist, die Szene wiederzugeben, zumindest einem Parameter, der eine Eigenschaft eines Übertragungsnetzes angibt, das dazu gedacht ist, den Szenegraphen in Richtung der Position zu übertragen, und zumindest einem Parameter eines Profils des Benutzers der Position,
- einen Schritt (S10), in welchem dem Szenegraphen einheitliche Identifizierungsdaten des einheitlichen Teilgraphen hinzugefügt werden, die dazu ausgelegt sind, anzugeben, dass der einheitliche Teilgraph für eine nachfolgende Anpassung anfällig ist, und
- einen Schritt (S20), in welchem dem Graphen Strategiedaten hinzugefügt werden, die zumindest eine variable Codierungsstrategie des Teilgraphen identifiziert durch die Identifizierungsdaten definieren, wobei die zumindest eine Strategie definiert, wie das nachfolgende Verfahren zur variablen Codierung abhängig von der konkreten Verwendungskonfiguration variiert,
**dadurch gekennzeichnet, dass**:
der Schritt der Identifizierung (S22/S30) einen Teilgraphen identifiziert, der in Form einer Funktion *ϕ*: S ↦ S definiert ist, die eine Teilmenge S, die Einschränkung E für diese Teilmenge sowie eine Teilmenge an Parametern Π|_{(E|ϕ(S)),ϕ(S)} der anfänglichen Menge Π identifiziert und die damit eine einheitliche und allgemeine Darstellung ist, unabhängig in Bezug auf diverse konkrete Konfigurationen, die während der Verarbeitung der Szene auftreten können.

2. Verfahren zur Erzeugung einer Darstellung einer Szene nach Anspruch 1, **dadurch gekennzeichnet, dass** die Identifizierungsdaten des Teilgraphen einen Knoten des Szenegraphen oder auch einen Teilgraphen bilden.

3. Verfahren zur Erzeugung einer Darstellung einer Szene nach Anspruch 1 oder 2, **dadurch gekennzeichnet, dass** die Strategiedaten einen Knoten des Szenegraphen bilden.

4. Verfahren zur Erzeugung einer Darstellung einer Szene nach einem der Ansprüche 1 bis 3, **dadurch gekennzeichnet, dass** der Code, der für die Umsetzung des Verfahrens zur variablen Codierung des Teilgraphen erforderlich ist, in den Graphen eingebunden ist.

5. Vorrichtung (10) zur Erzeugung einer Darstellung einer Multimedia-Szene, die eine Einheit zur Verarbeitung von Daten der Szene beinhaltet, die dazu ausgelegt ist, einen Szenegraphen zu erzeugen, der die Szene darstellt, wobei der Szenegraph (GS) eine Gruppe aus Knoten (S) und Beziehungen (E) beinhaltet, welche die Knoten (S) untereinander verbinden, wobei diese Beziehungen (E) einen Satz von Parametern (Π) einführen, wobei diese Vorrichtung beinhaltet:
- ein Mittel zur Identifizierung (30), das dazu ausgelegt ist, zumindest einen Teilgraphen des Szenegraphen zu identifizieren, wobei der Teilgraph dazu gedacht ist, ein nachfolgendes Verfahren zur Codierung zu durchlaufen, das abhängig von der Verwendungskonfiguration des Szenegraphen variieren kann, wobei die Verwendungskonfiguration des Szenegraphen einen Satz von Einschränkungen (ξ(t)) definiert, der zumindest einen Verwendungsparameter beinhaltet, der aus der Gruppe ausgewählt ist, bestehend aus: zumindest einem Parameter, der eine Fähigkeit einer Position angibt, die dazu gedacht ist, die Szene wiederzugeben, zumindest einem Parameter, der eine Eigenschaft eines Übertragungsnetzes angibt, das dazu gedacht ist, den Szenegraphen in Richtung der Position zu übertragen, und zumindest einem Parameter eines Profils des Benutzers der Position,
- ein Mittel zur Gruppierung (50), das dazu ausgelegt ist, dem Graphen Identifizierungsdaten hinzuzufügen, die dazu ausgelegt sind, anzugeben, dass der Teilgraph für eine nachfolgende Anpassung anfällig ist, und
- ein zweites Mittel zur Gruppierung (40), das dazu ausgelegt ist, dem Graphen Strategiedaten hinzuzufügen, die zumindest eine variable Codierungsstrategie des Teilgraphen identifiziert durch die Identifizierungsdaten definieren, wobei die zumindest eine Strategie definiert, wie das nachfolgende Verfahren zur variablen Codierung abhängig von der konkreten Verwendungskonfiguration variiert,
**dadurch gekennzeichnet, dass** das Mittel zur Identifizierung (30) dazu ausgestaltet ist, einen Teilgraphen zu identifizieren, der in Form einer Funktion *ϕ*: *S→ S* definiert ist, die eine Teilmenge S, die Einschränkung E für diese Teilmenge sowie eine Teilmenge an Parametern Π|_{(E|ϕ(S)),ϕ(S)} der anfänglichen Menge Π identifiziert und die damit eine einheitliche und allgemeine Darstellung ist, die keine mehreren Teilgraphen beinhaltet, die diversen Verwendungskonfigurationen entsprechen, die während der Verarbeitung der Szene auftreten können.

6. Vorrichtung (10) zur Erzeugung einer Darstellung einer Szene nach Anspruch 5, **dadurch gekennzeichnet, dass** das Mittel zur Gruppierung (50) dazu ausgelegt ist, in den Graphen einen Knoten einzuführen, der dazu dient, den Teilgraphen zu identifizieren.

7. Vorrichtung (10) zur Erzeugung einer Darstellung einer Szene nach Anspruch 5 oder 6, **dadurch gekennzeichnet, dass** das zweite Mittel zur Gruppierung (40) dazu ausgelegt ist, in den Graphen einen Knoten einzuführen, der die Daten von zumindest einer Strategie darstellt.

8. Vorrichtung (10) zur Erzeugung einer Darstellung einer Szene nach einem der Ansprüche 5 bis 7, **dadurch gekennzeichnet, dass** sie ein Mittel beinhaltet, um in die Darstellung der Szene den Code einzubinden, der die Umsetzung des Verfahrens zur variablen Codierung ermöglicht.

9. Verfahren zur Verarbeitung einer Darstellung einer Multimedia-Szene, die durch einen Szenegraphen dargestellt wird, wobei der Szenegraph (GS) eine Gruppe aus Knoten (S) und Beziehungen (E) beinhaltet, welche die Knoten (S) untereinander verbinden, wobei diese Beziehungen (E) einen Satz von Parametern (Π) einführen, wobei dieses Verfahren beinhaltet:
- einen Schritt der Identifizierung eines Teilgraphen des Graphen anhand von Identifizierungsdaten, die aus der Darstellung der Szene extrahiert sind, wobei der Teilgraph dazu gedacht ist, ein Verfahren zur Codierung zu durchlaufen, das abhängig von der Verwendungskonfiguration des Szenegraphen variieren kann, wobei die Verwendungskonfiguration des Szenegraphen einen Satz von Einschränkungen (ξ(t)) definiert, der zumindest einen Verwendungsparameter beinhaltet, der aus der Gruppe ausgewählt ist, bestehend aus: zumindest einem Parameter, der eine Fähigkeit einer Position angibt, die dazu gedacht ist, die Szene wiederzugeben, zumindest einem Parameter, der eine Eigenschaft eines Übertragungsnetzes angibt, das dazu gedacht ist, den Szenegraphen in Richtung der Position zu übertragen, und zumindest einem Parameter eines Profils des Benutzers der Position,
- einen Schritt der Bestimmung der konkreten Verwendungskonfiguration, und
- einen Schritt der Codierung (S40) des Teilgraphen durch Anwendung von zumindest einem Verfahren zur Codierung, das die konkrete Verwendungskonfiguration berücksichtigt,
**dadurch gekennzeichnet, dass**:
der Schritt der Identifizierung einen Teilgraphen identifiziert, der in Form einer Funktion *ϕ*: S → *S* definiert ist, die eine Teilmenge S, die Einschränkung E für diese Teilmenge sowie eine Teilmenge an Parametern n|(_{E|ϕ(S)),ϕ(S)} der anfänglichen Menge Π identifiziert und die damit eine einheitliche und allgemeine Darstellung ist, die keine mehreren Teilgraphen beinhaltet, die diversen Verwendungskonfigurationen entsprechen, die während der Verarbeitung der Szene auftreten können.

10. Verfahren zur Verarbeitung einer Darstellung einer Szene nach Anspruch 9, **dadurch gekennzeichnet, dass** der Schritt, der daraus besteht, die konkrete Verwendungskonfiguration zu bestimmen, daraus besteht, die Eigenschaften eines Übertragungskanals des Graphen und/oder die Eigenschaften einer Einrichtung, die dazu gedacht ist, die Multimedia-Szene wiederzugeben, und/oder des Profils ihres Benutzers zu festzulegen.

11. Verfahren zur Verarbeitung einer Darstellung einer Szene nach Anspruch 9 oder 10, **dadurch gekennzeichnet, dass** der Schritt der Codierung (S40) des Teilgraphen einen Schritt beinhaltet, in dem die Informationen, die für die Umsetzung des Verfahrens zur Codierung erforderlich sind, aus dem Graphen extrahiert werden.

12. Verfahren zur Verarbeitung einer Darstellung einer Szene nach einem der Ansprüche 9 bis 11, **dadurch gekennzeichnet, dass** es einen Schritt der Wiedergabe (S60) der Multimedia-Szene anhand des Graphen beinhaltet.

13. Vorrichtung zur Verarbeitung einer Darstellung einer Multimedia-Szene, die durch einen Szenegraphen dargestellt wird, wobei der Szenegraph (GS) eine Gruppe aus Knoten (S) und Beziehungen (E) beinhaltet, welche die Knoten (S) untereinander verbinden, wobei diese Beziehungen (E) einen Satz von Parametern (Π) einführen, wobei diese Vorrichtung zur Verarbeitung beinhaltet:
- Mittel zur Identifizierung eines Teilgraphen des Graphen anhand von Identifizierungsdaten, die aus der Darstellung der Szene extrahiert sind, wobei der Teilgraph dazu gedacht ist, ein Verfahren zur Codierung zu durchlaufen, das abhängig von der Verwendungskonfiguration des Szenegraphen variieren kann, wobei die Verwendungskonfiguration des Szenegraphen einen Satz von Einschränkungen (ξ(t)) definiert, der zumindest einen Verwendungsparameter beinhaltet, der aus der Gruppe ausgewählt ist, bestehend aus: zumindest einem Parameter, der eine Fähigkeit einer Position angibt, die dazu gedacht ist, die Szene wiederzugeben, zumindest einem Parameter, der eine Eigenschaft eines Übertragungsnetzes angibt, das dazu gedacht ist, den Szenegraphen in Richtung der Position zu übertragen, und zumindest einem Parameter eines Profils des Benutzers der Position,
- Mittel zur Bestimmung der konkreten Verwendungskonfiguration, und
- Mittel zur Codierung des Teilgraphen durch Anwendung von zumindest einem Verfahren zur Codierung, das die konkrete Verwendungskonfiguration berücksichtigt,
**dadurch gekennzeichnet, dass** die Mittel zur Identifizierung dazu ausgestaltet sind, einen Teilgraphen zu identifizieren, der in Form einer Funktion *ϕ*: *S* ↦ *S* definiert ist, die eine Teilmenge S, die Einschränkung E für diese Teilmenge sowie eine Teilmenge an Parametern Π|_{(E|ϕ(S)),ϕ(S)} der anfänglichen Menge Π identifiziert und die damit eine einheitliche und allgemeine Darstellung ist, die keine mehreren Teilgraphen beinhaltet, die diversen Verwendungskonfigurationen entsprechen, die während der Verarbeitung der Szene auftreten können.

14. Vorrichtung zur Verarbeitung einer Darstellung einer Szene nach Anspruch 13, **dadurch gekennzeichnet, dass** die Mittel zur Bestimmung des Wertes des Parameters dazu ausgelegt sind, die Eigenschaften eines Übertragungsweges des Graphen und/oder auch die Eigenschaften einer Einrichtung zur Wiedergabe der Multimedia-Szene festzulegen.

15. Vorrichtung zur Verarbeitung einer Darstellung einer Szene nach Anspruch 13 oder 14, **dadurch gekennzeichnet, dass** die Mittel zur Codierung des Teilgraphen einen Code verwenden, der aus dem Graphen extrahiert ist.

16. Vorrichtung zur Verarbeitung einer Darstellung einer Szene nach einem der Ansprüche 13 bis 15, **dadurch gekennzeichnet, dass** sie eine Wiedergabemaschine beinhaltet, die dazu ausgelegt ist, die Multimedia-Szene wiederzugeben.

## Claims

1. A method of producing a representation of a multimedia scene, this method comprising a data-processing step processing data of said scene to produce a scene graph representing said scene, the scene graph (GS) comprising a set of nodes (vertices) (S) and relations (E) which associate the nodes with one another, these relations using parameters (Π), this method comprising:
- an identification step (S22) identifying at least one sub-graph of said scene graph, said sub-graph being destined to undergo a subsequent coding process susceptible of varying as a function of the configuration of use of the scene graph, the configuration of use of the scene graph defining a set of constraints (ξ(t)) comprising at least one use parameter selected in the group consisting of: at least one parameter indicating a capability of a terminal that will reconstitute the scene, at least one parameter indicating a property of a transmission network that will transmit the scene graph to said terminal, and at least one parameter of a user profile of the user of said terminal,
- a step (S10) during which there is added, to said scene graph, identification data, of said unitary sub-graph, configured to indicate that said unitary sub-graph is liable to be subject to subsequent adaptation, and
- a step (S20) during which strategy data defining at least one variable coding strategy of the sub-graph identified by the identification data is added to said graph, said at least one strategy defining how said subsequent variable coding process varies as a function of the actual configuration of use;
**characterized in that**:
the identification step (S22/S30) identifies a sub-graph defined in the form of a function *ϕ*: S ↦ S which identifies a sub-set of S, the restriction of E to this sub-set, as well as a sub-set of parameters Π|_{(E|ϕ(S)),ϕ(S)} of the initial set Π, and which, thus, is a unitary and general representation, independent of the various actual configurations which may be encountered during processing of the scene.

2. A scene-representation production method according to Claim 1 **characterised in that** the identification data of the sub-graph constitutes a node of the scene graph or even a sub-graph.

3. A scene-representation production method according to Claim 1 or 2 **characterised in that** said strategy data constitutes a node of the scene graph.

4. A scene-representation production method according to any one of Claims 1 to 3, **characterised in that** the code necessary for executing the variable coding process of said sub-graph is embedded in said graph.

5. A device (10) to produce a representation of a multimedia scene, comprising a data-processing unit to process data of said scene, adapted to produce a scene graph representing said scene, said scene graph (GS) comprising a set of nodes (vertices) (S) and relations (E) which associate the nodes with one another, these relations using parameters (Π), this device comprising:
- identification means (30) adapted to identify at least one sub-graph of said scene graph, said sub-graph being destined to undergo a subsequent coding process susceptible of varying as a function of the configuration of use of the scene graph, the configuration of use of the scene graph defining a set of constraints (ξ(t)) comprising at least one use parameter selected in the group consisting of: at least one parameter indicating a capability of a terminal that will reconstitute the scene, at least one parameter indicating a property of a transmission network that will transmit the scene graph to said terminal, and at least one parameter of a user profile of the user of said terminal,
- grouping means (50) configured to add, to said graph, identification data adapted to indicate that said sub-graph is susceptible to being adapted subsequently, and
- second grouping means (40) configured to add, to said graph, strategy data defining at least one variable coding strategy of said sub-graph identified by the identification data, said at least one strategy defining how said subsequent variable coding process varies as a function of the actual configuration of use;
**characterized in that**:
the identification means (30) is adapted to identify a sub-graph defined in the form of a function *ϕ*: S ↦ S which identifies a sub-set of S, the restriction of E to this sub-set, as well as a sub-set of parameters Π|_{(E|ϕ(S)),ϕ(S)} of the initial set Π, and which, thus, is a unitary and general representation that does not include multiple sub-graphs corresponding to the various configurations of use that may be encountered during processing of the scene.

6. A scene-representation production device (10) according to Claim 5, **characterised in that** said grouping means (50) is configured to introduce, into said graph, a node serving to identify said sub-graph.

7. A scene-representation production device (10) according to Claim 5 or 6, **characterised in that** said second grouping means (40) is configured to introduce, into said graph, a node representative of said data of at least one strategy.

8. A scene-representation production device (10) according to any one of Claims 5 to 7, **characterised in that** it comprises means for embedding, in said scene representation, code for executing said variable coding process.

9. A method of processing a representation of a multimedia scene represented by a scene graph, said scene graph (GS) comprising a set of nodes (vertices) (S) and relations (E) which associate the nodes with one another, these relations using parameters (Π), this method comprising:
- a step of identifying a sub-graph of said graph, from identification data extracted from said scene representation, said sub-graph being destined to undergo a coding process susceptible of varying as a function of the configuration of use of the scene graph, the configuration of use of the scene graph defining a set of constraints (ξ(t)) comprising at least one use parameter selected in the group consisting of: at least one parameter indicating a capability of a terminal that will reconstitute the scene, at least one parameter indicating a property of a transmission network that will transmit the scene graph to said terminal, and at least one parameter of a user profile of the user of said terminal,
- a step for determination of the actual configuration of use; and
- a coding step (S40) of said sub-graph by application of at least one coding process taking into account the actual configuration of use;
**characterized in that**:
the identification step (S22/S30) identifies a sub-graph defined in the form of a function *ϕ*: S ↦ S which identifies a sub-set of S, the restriction of E to this sub-set, as well as a sub-set of parameters Π|_{(E|ϕ(S)),ϕ(S)} of the initial set Π, and which, thus, is a unitary and general representation that does not include multiple sub-graphs corresponding to the various configurations of use that may be encountered during processing of the scene.

10. A scene-representation processing method according to Claim 9, **characterised in that** the step of determining the actual configuration of use of the scene graph consists of determining the properties of a transmission channel of said graph and/or the properties of a device that is to reconstitute said multimedia scene and/or the profile of its user.

11. A scene-representation processing method according to Claims 9 or 10 **characterised in that** the step (S40) of coding said sub-graph comprises a step during which the information necessary for executing said coding process is extracted from said graph.

12. A scene-representation processing method according to any one of Claims 9 to 11 **characterised in that** it comprises a step of reconstituting said multimedia scene from said graph.

13. A device for processing a representation of a multimedia scene represented by a scene graph, said scene graph (GS) comprising a set of nodes (vertices) (S) and relations (E) which associate the nodes with one another, these relations using parameters (Π), this processing device comprising:
- means to identify a sub-graph of said graph, from identification data extracted from said scene representation, said sub-graph being destined to undergo a coding process susceptible of varying as a function of the configuration of use of the scene graph, the configuration of use of the scene graph defining a set of constraints (ξ(t)) comprising at least one use parameter selected in the group consisting of: at least one parameter indicating a capability of a terminal that will reconstitute the scene, at least one parameter indicating a property of a transmission network that will transmit the scene graph to said terminal, and at least one parameter of a user profile of the user of said terminal;
- means for determining the actual configuration of use; and
- means to code said sub-graph by application of at least one coding process taking into account the actual configuration of use;
**characterized in that**:
the identification means is adapted to identify a sub-graph defined in the form of a function *ϕ*: S ↦ S which identifies a sub-set of S, the restriction of E to this sub-set, as well as a sub-set of parameters Π|_{(E|ϕ(S)),ϕ(S)} of the initial set Π, and which, thus, is a unitary and general representation that does not include multiple sub-graphs corresponding to the various configurations of use that may be encountered during processing of the scene.

14. A scene-representation processing device according to Claim 13, **characterised in that** said means for determining the value of said parameter are adapted to establish the properties of a transmission path of said graph and/or the properties of a device that will reconstitute said multimedia scene.

15. A scene-representation processing device according to Claim 13 or 14 **characterised in that** said coding means of said sub-graph uses code extracted from said graph.

16. A scene-representation processing device according to any one of Claims 13 to 15, **characterised in that** it comprises a rendering engine adapted to reconstitute said multimedia scene.
